(19) Europäisches Patentamt
European Patent Office
Office européen des brevets

(11) **EP 0 979 014 B1**

(12) **FASCICULE DE BREVET EUROPEEN**

(45) Date de publication et mention
de la délivrance du brevet:
**09.05.2007   Bulletin 2007/19**

(51) Int Cl.:
*H04Q 3/66* *(2006.01)*   *H04Q 3/62* *(2006.01)*

(21) Numéro de dépôt: **99401902.4**

(22) Date de dépôt: **26.07.1999**

(54) **Routage dans un réseau privé avec compression**

Leitweglenkung in einem privaten Netz mit Komprimierung

Routing in a private network with compression

(84) Etats contractants désignés:
**AT BE CH CY DE DK ES FI FR GB GR IE IT LI LU
MC NL PT SE**

(30) Priorité:  **06.08.1998  FR 9810131**

(43) Date de publication de la demande:
**09.02.2000  Bulletin 2000/06**

(73) Titulaire: **Alcatel Lucent
75008 Paris (FR)**

(72) Inventeurs:
• **Phan, Cao Thanh
92500 Rueil Malmaison (FR)**
• **Bennai, Lahcen
92700 Colombes (FR)**

(74) Mandataire: **Lamoureux, Bernard et al
Alcatel Lucent
Intellectual Property & Standards
54 rue La Boétie
75008 Paris (FR)**

(56) Documents cités:
WO-A-98/16083          DE-A- 19 614 926
GB-A- 2 283 154

• SAMEH RABIE: "TRAFFIC MANAGEMENT IN MULTI-SERVICE ENTERPRISE NETWORKS" ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, vol. 1, no. SYMP. 15, 23 avril 1995 (1995-04-23), pages 336-340, XP000495590 VERBAND DEUTSCHER ELEKTROTECHNIKER (VDE) ET AL
• FIEDLER C: "SPRACHKOMMUNIKATION IN >>CORPORATE NETWORK<<" TELCOM REPORT, vol. 18, no. 1, 1 janvier 1995 (1995-01-01), page 20/21 XP000491914
• TORRIERI D: "ALGORITHMS FOR FINDING AN OPTIMAL SET OF SHORT DISJOINT PATHS IN A COMMUNICATION NETWORK" IEEE TRANSACTIONS ON COMMUNICATIONS, vol. 40, no. 11, 1 novembre 1992 (1992-11-01), pages 1698-1702, XP000336308
• "OPTIMAL COMPRESSION AND ROUTING IN NETWORKS" IBM TECHNICAL DISCLOSURE BULLETIN, vol. 34, no. 3, 1 août 1991 (1991-08-01), pages 19-21, XP000210435
• CHIA-JIU WANG ET AL: "THE USE OF ARTIFICIAL NEURAL NETWORKS FOR OPTIMAL MESSAGE ROUTING" IEEE NETWORK: THE MAGAZINE OF COMPUTER COMMUNICATIONS, vol. 9, no. 2, 1 mars 1995 (1995-03-01), pages 16-24, XP000493486

**Description**

La présente invention a pour objet un procédé de routage dans un réseau privé dans lequel au moins certaines artères mettent en oeuvre une compression.

L'invention concerne les réseaux privés de télécommunications. De tels réseaux sont formés de noeuds de communication, reliés entre eux par des arcs ou artères acheminant les communications et/ou la signalisation. Elle s'applique aussi bien aux réseaux privés formés de liaisons dédiées (réseaux privés physiques), qu'aux réseaux privés virtuels, ou aux réseaux mixtes mélangeant ces deux solutions. Dans la suite de la description, l'invention est décrite en référence à un exemple de réseau privé avec signalisation, mais elle s'applique de façon plus générale à d'autres réseaux privés.

Dans de tels réseaux, il est connu, sur certaines artères, de procéder à une compression des signaux transmis. Ceci peut notamment être le cas sur les artères ne présentant qu'un seul canal, pour permettre l'acheminement d'un plus grand nombre de communications. Une telle compression peut présenter l'inconvénient d'induire des pertes de qualité, et le cas échéant d'augmenter le temps de transit du fait du temps nécessaire pour les compressions et les décompressions. Un nombre important de compressions et de décompressions peut aussi provoquer des échos et des affaiblissements dans la communication.

Certains procédés de routage connus ignorent le nombre de compressions et de décompressions et acceptent la dégradation de la qualité des communications dans les cas où le nombre est important. Cette solution conduit à fournir, dans certaines instances, un service présentant une qualité dégradée. D'autres procédés de routage utilisent une table de routage statique, dans laquelle le nombre de compressions et de décompressions est limité. Cette solution est limitée et ne permet pas de pleinement exploiter le réseau privé. Une dernière solution consiste à limiter, par configuration, le nombre de noeuds de transit, et donc le nombre possible de compressions et décompressions; cette solution n'est pas applicable dans tous les réseaux privés, et en limite les configurations possibles.

Le document XP000210435 (IBM TECHNICAL DISCLOSURE BULLETIN), 1 août 1991, décrit un procédé consistant à construire un graphe pondéré par les coûts de compression, de décompression, et de transmission. Le chemin le moins coûteux est déterminé par un algorithme classique tel que l'algorithme de Dijkstra.

Pour les réseaux privés se pose aussi le problème du débordement; i. e. le problème d'une demande de communication qui ne peut pas être satisfaite par le réseau, du fait d'une saturation des ressources. Ceci peut advenir dès lors que les artères privées du réseau privé présentent une capacité fixe, et non allouée dynamiquement, qui est inférieure au volume maximal du trafic possible. Il est connu d'assurer la communication correspondante, en empruntant le réseau public ou un autre réseau externe. En d'autres termes, si un abonné d'un premier noeud du réseau privé cherche à joindre un abonné d'un deuxième noeud, et si au moins une artère du réseau privé est saturée de sorte que la communication ne peut être assurée, la communication est assurée directement depuis le premier noeud vers le deuxième noeud à travers un réseau externe - typiquement le réseau public.

Cette solution pose les problèmes suivants. D'une part, le recours au réseau public a un coût; d'autre part, il n'est pas certain qu'il existe un faisceau d'accès au réseau public pour tous les noeuds. D'autre part, cette solution est économiquement peu rentable, et n'exploite pas pleinement les ressources du réseau privé.

L'invention propose une solution à ces problèmes; elle permet de gérer les débordements du réseau privé, en minimisant les coûts d'accès au réseau au réseau public, et en maximisant l'utilisation des ressources du réseau privé. Elle s'applique non seulement pour les débordements vers le réseau public, mais plus généralement pour les débordements vers tous les types de réseaux externes au réseau privé: réseau public commuté, réseau public mobile terrestre ou satellite, autre réseau privé, etc.

L'algorithme de Dijkstra est décrit dans les ouvrages d'algorithmique, et est connu pour trouver dans un graphe un plus court chemin entre deux noeuds. On pourra notamment consulter (inclure référence si nécessaire). Cet algorithme est le suivant : on considère un graphe G de N noeuds, qui est valué, i. e. dont chaque trajet existant entre deux noeuds i et j est affecté d'une valuation ou poids $l(i, j)$. On considère s un noeud de départ du graphe G, d un noeud d'arrivée, et on cherche un chemin minimisant $\pi(s, d)$, la distance de s à d, i. e. la somme des valuations des arcs reliant s à d.

On note S le sous-graphe de G formé des noeuds x pour lesquels on connaît le chemin minimal vers s, et $\overline{S}$ son complémentaire. On note en outre $\Gamma_i$ l'ensemble des noeuds voisins d'un noeud i donné.

Au départ, le sous-graphe S ne contient que le noeud s, et $\overline{S}$ contient l'ensemble des autres noeuds, affecté des valeurs initiales suivantes:

$\pi(s, i) = l(s, i)$ pour $i \in \Gamma_s$, le noeud parent étant s;
$\pi(s, d) = \infty$, pour les autres noeuds, qui n'ont pas de noeud parent.

Une itération de l'algorithme s'effectue de la façon suivant.

Si $\overline{S}$ est vide, ou s'il ne contient que des noeuds i avec $\pi(s, i) = \infty$, on a terminé.

Sinon, on considère le noeud n de $\overline{S}$ qui est le plus proche du noeud de départ, i. e. le noeud qui minimise $\pi$

(s, i), i ∈ $\overline{S}$; on prend ce noeud et on l'enlève de $\overline{S}$ pour le mettre dans S.

Ensuite, on considère les voisins de ce noeud n et on calcule

$$\pi(s, n) + l(n, j), \quad j \in \Gamma_n \text{ et } j \in \overline{S};$$

Si cette quantité est inférieure à $\pi(s, j)$, on met à jour $\pi(s, j)$ :

$$\pi(s, j) := \pi(s, n) + l(n, j)$$

et on met aussi à jour le noeud $\phi(j)$ parent de j, qui devient n.

On procède à cette opération pour tous les noeuds de $\Gamma_n$, puis on réordonne $\overline{S}$.

De la sorte, on ajoute progressivement à S l'ensemble des noeuds du graphe, en procédant par longueur croissante des chemins.

Si on recherche un chemin vers un noeud d donné, l'algorithme peut êtreinterrompu avant la fin, dès lors que le noeud de destination a été ajouté dans le sous graphe S.

L'algorithme se démontre par l'absurde de la façon suivante. On considère n le noeud le plus proche de S, qui doit être ajouté à S. S'il existe un chemin le plus proche, ce chemin part de s et arrive à n, et présente un premier noeud dans $\overline{S}$, noté m. On a alors

$$\pi(s, m) + \pi(m, n) < \pi(s, n)$$

et puisque $\pi(m, n)$ est positif ou nul,

$$\pi(s, m) < \pi(s, n)$$

ce qui est contraire à l'hypothèse. Il est clair par ailleurs que $\pi(s, m)$ a été calculé dans une itération précédente, lors de l'ajout dans S du parent de m.

L'invention propose une solution au problème du routage dans les réseaux privés utilisant sur certaines artères une compression des signaux, qui préserve la qualité des communications, tout en assurant une bonne exploitation des capacités du réseau. Elle permet en outre de satisfaire des contraintes autres, et par exemple de gérer les débordements vers d'autres réseaux.

Il est clair que ce problème est un problème technique important, et que le procédé revendiqué constitue de ce point de vue une solution technique à un problème technique - même s'il utilise un algorithme.

Plus précisément, l'invention propose un procédé de routage entre un noeud source et un noeud destinataire dans un réseau privé présentant des noeuds reliés par des artères, chaque artère pouvant être de type sans compression ou de type avec compression,

une compression étant mise en oeuvre sur au moins une des dites artères, mais le nombre total de compressions et de décompressions réalisées pour l'acheminement d'une communication ne devant pas dépasser une limite maximale fixée ; ce procédé comportant au moins une étape consistant à sauvegarder les résultats obtenus pour une valeur donnée du nombre de compressions et de décompressions afin de les utiliser pour les calculs ultérieurs ;
**caractérisé** en ce qu'il comporte :

- une étape de recherche d'un plus court chemin entre un noeud source et un noeud destinataire pour un nombre donné de compressions et décompressions ;
- puis au moins une autre étape de recherche d'un plus court chemin entre ce noeud source et ce noeud destinataire en faisant croître la valeur du nombre compressions et décompressions, celui-ci restant inférieur ou égal à la limite maximale fixée ;
- puis une étape de détermination du chemin le plus court parmi les chemins les plus courts trouvés précédemment.

Dans un mode de mise en oeuvre de l'invention, le procédé comprend le choix d'une fonction de coût, et le calcul de routage comprend la minimisation de la fonction de coût.

Avantageusement, une étape de calcul de routage pour un nombre donné de compressions comprend, en un noeud (n) où le nombre de compressions depuis le noeud source est égal au nombre donné, la recherche et la sauvegarde pour une étape de calcul ultérieure des artères adjacentes sur lesquelles une compression est mise en oeuvre.

Une étape de calcul de routage pour un nombre donné de compressions peut s'effectuer par application de l'algorithme de Dijkstra, en vérifiant le nombre de compressions lors de l'ajout d'un noeud au routage.

Dans un autre mode de mise en oeuvre de l'invention, le réseau comprend en outre des arcs de débordements vers un réseau externe, et le procédé comprend au moins deux étapes de calcul de routage pour un nombre donné de débordements et pour un nombre donné de compressions, une étape de calcul de routage pour un nombre de débordements et un nombre donné de compressions utilisant des informations obtenues lors d'une étape de calcul de routage pour un nombre de débordement inférieur au dit nombre donné de débordements.

Dans ce cas, le procédé comprend de préférence le choix d'une fonction de coût représentative du coût des débordements, et le calcul de routage comprend la minimisation de la fonction de coût.

De préférence, les étapes de calcul s'effectuent, pour un nombre donné de débordement, en faisant varier le nombre de compressions, puis en faisant varier le nombre de débordements.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique de la mise en oeuvre du procédé de l'invention dans un réseau privé à six noeuds;
- figure 2 une représentation schématique de la mise en oeuvre de l'invention, dans un autre réseau privé;
- figure 3 une représentation schématique de la mise en oeuvre de l'invention, dans encore un autre réseau privé.

L'invention propose, dans un réseau privé, de calculer un routage en recherchant le plus court chemin, entre un noeud source et un noeud destinataire, pour une valeur donnée du nombre de compressions et décompressions, puis en faisant croître la valeur du nombre de compressions et décompressions. En outre, pour limiter le nombre de calcul, l'invention propose de sauvegarder les résultats obtenus pour une valeur donnée du nombre de compressions et de décompressions afin de les utiliser pour les calculs ultérieurs.

On décrit dans la suite l'invention dans l'exemple d'un réseau privé comprenant différents types d'arcs ou artères, à savoir des artères avec ou sans compression; le réseau permet en outre l'acheminement de communications de voix ou de données. On considère dans l'exemple les règles d'acheminement suivantes à travers le réseau:

- si possible, en pasant d'un noeud à l'autre, on cherche à rester dans la même qualité de communication - compressée ou non - de sorte à ne pas diminuer les libertés de compression et de décompression pour l'acheminement ultérieur de la communication;
- si la compression est nécessaire pour passer d'un noeud à son voisin, alors le nombre total de compressions et décompressions réalisées pour l'acheminement de la communication ne doit pas dépasser la limite maximale choisie; cette limite peut d'ailleurs dépendre le cas échéant du type de communication en transit; cette limite est avantageusement déterminée de sorte à permettre une qualité d'écoute à l'arrivée.
- si une communication arrive sur un noeud sous une forme comprimée, et si l'artère suivante le permet, on progresse sans décomprimer la communication; sinon, on peut décomprimer la communication.

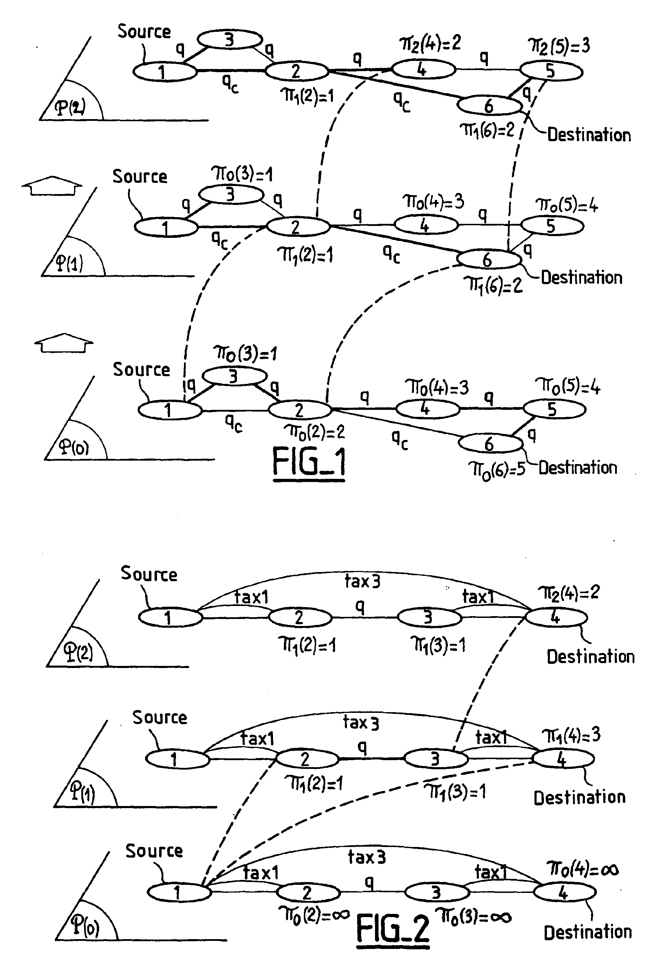

La figure 1 montre une représentation schématique de la mise en oeuvre du procédé de l'invention dans un réseau privé à six noeuds. Le réseau de la figure 1 comprend six noeuds numérotés de 1 à 6, et les artères ou arcs suivants:

- des artères sans compressions entre les noeuds 1 et 3, 3 et 2, 2 et 4, 4 et 5, 5 et 6, marquées "q" sur la figure;
- des artères avec compression entre les noeuds 1 et 2, et 2 et 6, marquées "$q_c$" sur la figure.

Dans l'exemple donné en référence à la figure 1, on cherche un routage entre les noeuds source 1 et destinataire 6, avec un nombre maximal de compressions et de décompressions NVcompMax de 2. Intuitivement, la solution est un routage via le noeud 2, avec une seule compression et une décompression au noeud 6; comme expliqué plus haut, on ne décomprime pas lors du transit à travers le noeud 2.

Pour obtenir la solution, l'invention propose d'appliquer l'algorithme de Dijkstra, pour un calcul de plus court chemin, avec des modifications permettant de satisfaire les contraintes sur le nombre de compressions et de décompressions. Elle propose d'appliquer l'algorithme pour rechercher successivement des plus courts chemins pour des nombres donnés de compressions et décompressions. Dans l'exemple de la figure 1, on commence par chercher les plus courts chemins ne présentant aucune compression, comme représenté symboliquement dans le bas de la figure 1 par le plan P(0); on cherche ensuite les plus courts chemin présentant une compression, dans le plan P(1), puis les plus courts chemins présentant deux compressions et décompressions, dans le plan P(2). On note dans la suite $\pi_v(s, n)$ la distance entre le noeud s et le noeud n dans un routage présentant au plus v compressions et décompressions.

Dans l'application au cas de la figure 1, le procédé est appliqué de la façon suivante. Dans le plan P(0), on considère les routages sans compression ni décompression, et on calcule de la sorte:

$\pi_0(1, 3) = 1$
$\pi_0(1, 2) = 2,$
$\pi_0(1, 4) = 3,$
$\pi_0(1, 5) = 4,$
$\pi_0(1, 6) = 5,$

les plus courts chemins étant représentés en gras sur la figure 1.

Dans le plan P(1), on considère les routages présentant une compression, et on calcule de la sorte
$\pi_1(1, 2) = 1$, en passant par l'artère entre 1 et 2
$\pi_1(1, 6) = 2$, en passant par l'artère entre 1 et 2, puis par l'artère entre 2 et 6 sans décomprimer au noeud 2.
Dans le plan P(2), on considère les routages présentant deux compression ou décompression, et on calcule de la sorte
$\pi_2(1, 4) = 2$, en passant par l'artère entre 1 et 2, avec une compression et une décompression;
$\pi_2(1, 5) = 3$, en passant par l'artère entre 1 et 2, puis par l'artère entre 2 et 6 sans décomprimer au noeud 2, mais en décomprimant au noeud 6.
Avantageusement, l'invention propose d'utiliser à une étape du calcul le chemin le plus court utilisé pour un noeud dans l'étape de calcul précédente. Ainsi, toujours en référence à la figure 1, dans le calcul dans le plan P(1), on peut utiliser:
- le fait que l'artère entre le noeud 1 et le noeud 2 implique une compression, et
- le fait que $\pi_0(1, 2) = 2$, et que l'artère entre le noeud 2 et le noeud 6 implique une compression,

ces deux faits étant déterminés lors du calcul de plus court chemin dans le plan P(0). Autrement dit, dans le plan P(0), lorsque l'on arrive sur un noeud n à une artère sur laquelle une compression est possible, on note la distance $\pi_0(s, n)$ entre le noeud source et le noeud n, que l'on utilisera dans le calcul dans le plan supérieur. Ceci est symbolisé, sur la figure 1, par les traits en pointillé entre les plans P(0) et P(1).

De la sorte, dans le plan P(1), on peut directement calculer $\pi_1(1, 2)$ et $\pi_1(1, 6)$

De la même façon, les traits pointillés entre les plans P(1) et P(2) indiquent que l'on peut utiliser dans le plan P(2) les résultats obtenus lors des calculs dans le plan P(1).

Dans chaque plan, on peut utiliser pour les calculs l'algorithme de Dijkstra, ou un algorithme de calcul de plus court chemin analogue. Dans ce cas, lors d'une itération de l'algorithme de Dijkstra, lorsque l'on teste les noeuds voisins, on peut vérifier si l'on respecte le nombre maximal de compressions. Si tel est le cas, on peut mettre à jour la distance dans un plan supérieur.

Dans l'exemple de la figure 1, dans le plan P(2), on évite de recalculer le routage avec une compression du noeud 1 vers le noeud 6, en passant par le noeud 2. On a d'emblée lors du passage par le noeud 6 dans le plan P(1) mis à jour $\pi_2(1,5)$ en déterminant qu'il fallait décomprimer pour emprunter l'artère entre 6 et 5. De la même façon, lors du passage par le noeud 2 dans le plan P(1), on a mis à jour $\pi_2(1,4)$ en déterminant qu'il fallait décomprimer pour emprunter l'artère entre 2 et 4.

Dans un plan, lorsque l'on en trouve plus de plus court chemin, ou lorsqu'on ne peut plus progresser, on augmente le nombre donné de compresssions, et on passe ainsi dans un plan supérieur.

Cette mise en oeuvre de l'invention revient à rechercher successivement les chemins impliquant un nombre donné de compression et de décompression, et à mettre à jour à chaque changement du nombre de compressions et de décompressions les distances dans les plans supérieurs. Le meilleur chemin - s'il existe - est

$$\pi^*(s,d) = \operatorname*{Min}_{v=1}^{NVCompMax} (\pi_v(s,d))$$

On arrive ainsi au calcul du meilleur chemin, avec un nombre de compressions et de décompressions inférieur au nombre maximal NVCompMax. La détermination du chemin s'effectue en remontant les noeuds parents en partant du noeud de destination d, et en comptant le nombre de compressions et de décompressions.

En notant h la valeur de v pour laquelle le minimum $\pi^*(s, d)$ est atteinte, on cherche le prédécesseur de d dans le plan P(h), soit $\phi_h(d)$. Pour tout noeud j sur le routage de s à d, atteint avec k compressions et décompressions, on choisit le prédécesseur de j dans le plan P(n), avec n $\geq$ k, et

$$\pi_n(s, j) + \pi(j, d) = \pi*(s, d)$$

la distance $\pi(j, d)$ étant la distance sur le routage optimal déjà déterminé entre j et d. On parvient ainsi à remonter jusqu'au noeud s. Le changement de plan est alors indicatif d'un changement de compression. Ceci permet de déterminer quand la communication doit être décompressée, ou quand elle doit transiter sans être décompressée.

Dans ce mode de réalisation, on a décrit un réseau privé dans lequel en sortie d'une artère avec compression, on disposait d'un signal comprimé susceptible d'être acheminé en conservant la compression. De ce fait, lors des calculs dans le plan P(v), on met à jour les $\pi_{v+1}(s, i)$. Il est aussi possible de gérer des artères engendrant nécessairement une compression et une décompression - ce qui peut être le cas d'artères utilisant un multiplexeur externe, ou un compresseur d'une autre nature. Dans ce cas, on mettrait simplement à jour les $\pi_{v+2}(s, i)$, en arrivant sur une artère utilisant un tel multiplexeur, avec un signal non compressé. En arrivant sur une artère utilisant un tel multiplexeur avec un signal compressé, le signal doit être décompressé, avant de passer dans l'artère. Dans ce cas, on mettrait à jour $\pi_{v+3}(s, i)$. L'invention permet ainsi de gérer différents types de compression et s'adaptent à toutes les règles de compatibilité dans le transfert des signaux.

Par ailleurs, dans le mode de réalisation de la figure 1, on ne s'est préoccupé que des compressions, et de ce faits, les arcs présentent tous pour le calcul de plus court chemin une valuation de 1. Il est aussi possible, comme dans le mode de réalisation de la figure 2, de considérer un coût non unitaire, par exemple un coût représentatif de l'utilisation des ressources du réseau privé, typiquement un coût décroissant lorsque le nombre de ressources disponibles diminue.

La figure 2 montre un autre mode de mise en oeuvre de l'invention. Dans l'exemple de la figure 2, on a pris en compte non seulement le problème de la compression, mais aussi le problème des débordements vers un réseau externe. L'invention permet dans ce cas de limiter le nombre de compressions et de décompressions, et aussi de limiter le nombre de débordements vers un réseau externe. On assure ainsi le maintien de la qualité de service, la limitation de la durée d'établissement de la communication.

La figure 2 montre un exemple de réseau privé à quatre noeuds, qui comprend quatre noeuds numérotés de 1 à 4, et des artères ou arcs de signalisation entre les noeuds 1 et 2, 3 et 4, et une artère sans compression entre les noeuds 2 et 3. En outre, des débordements ou sauts sont possibles à travers un réseau externe,

- entre les noeuds 1 et 2, avec une taxe de 1;
- entre les noeuds 1 et 4, avec une taxe de 3;
- entre les noeuds 3 et 4, avec une taxe de 1.

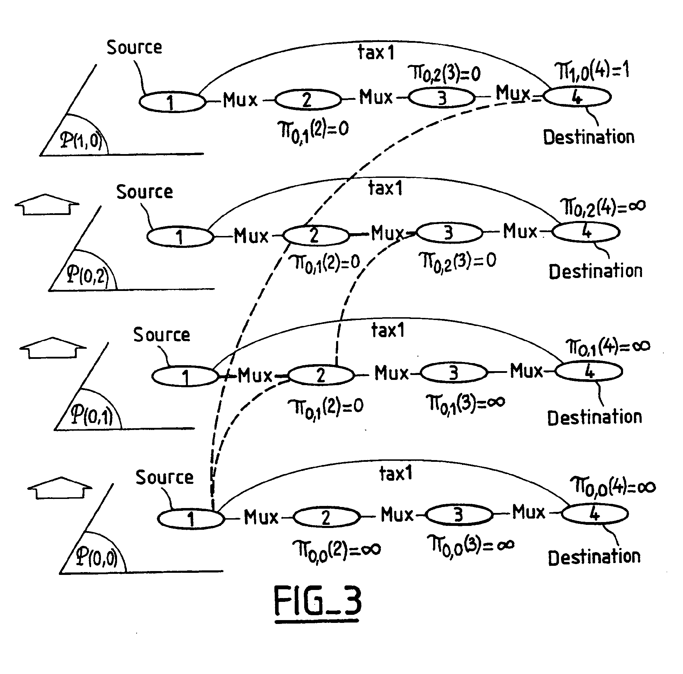

Dans cet exemple, on cherche un routage entre le noeud 1 et le noeud 4, qui présente au plus un nombre de débordements ou sauts NsautMax égal à deux, et qui minimise la somme des taxes. Dans l'exemple, on n'a pas considéré de compressions, mais l'invention s'applique aussi en présence de compression, comme le montre le mode de réalisation décrit en référence à la figure 3.

Intuitivement, la solution est un routage avec un débordement entre les noeuds 1 et 2, en passant par le réseau privé entre les noeuds 2 et 3, et avec un autre débordement entre les noeuds 3 et 4.

Pour obtenir cette solution, l'invention propose d'appliquer l'algorithme de Dijkstra, pour un calcul de plus court chemin, avec des modifications permettant de satisfaire les contraintes sur le nombre de sauts. Elle propose d'appliquer l'algorithme pour rechercher successivement des plus courts chemins pour des nombres donnés de sauts. Dans l'exemple de la figure 1, on commence par chercher les plus courts chemins ne présentant aucun saut, comme représenté symboliquement dans le bas de la figure 1 par le plan P(0); on cherche ensuite le plus court chemin présentant au plus un saut, dans le plan P(1), puis le plus court chemin présentant deux sauts, dans le plan P(2). On note dans la suite $\pi_v(s, n)$ la taxe totale encourue entre le noeud s et le noeud n, qui est infinie si on ne peut pas atteindre le noeud.

Dans l'application au cas de la figure 2, le procédé est appliqué de la façon suivante. Dans le plan P(0), on considère les routages sans saut, et on calcule de la sorte:

$\pi_0(1, 2) = \infty$;
$\pi_0(1, 3) = \infty$;
$\pi_0(1, 4) = \infty$;

puisqu'en effet il est impossible d'atteindre un noeud du réseau sans débordement.

Dans le plan P(1), on considère les routages présentant une compression, et on calcule de la sorte

$\pi_1(1, 2) = 1$ en débordant entre 1 et 2;

$\pi_1(1, 3) = 1$ en débordant entre 1 et 2, puis par l'artère entre 2 et 3;

$\pi_1(1, 4) = 3$ en débordant entre 1 et 4.

Dans le plan P(2), on considère les routages présentant deux sauts, et on calcule de la sorte $\pi_2(1, 4) = 2$, en débordant entre 1 et 2 puis entre 3 et 4.

Comme plus haut, l'invention propose d'utiliser à une étape du calcul le chemin le plus court utilisé pour un noeud dans l'étape de calcul précédente. Ainsi, en référence à la figure 2, dans le calcul dans le plan P(1), on peut utiliser:

- le fait qu'un débordement est possible entre le noeud 1 et le noeud 2, et
- le fait qu'un débordement est possible entre le noeud 1 et le noeud 4.

ces deux faits étant déterminés lors du calcul de plus court chemin dans le plan P(0), lorsque l'on examine les noeuds voisins du noeud 1, et que l'on détermine que l'on ne peut atteindre les noeuds 2 et 4 qu'au prix d'un débordement. Plus généralement, dans le plan P(0), lorsque l'on arrive sur un noeud n à un débordement possible, on sauvegarde l'information pour le calcul dans le plan supérieur. Ceci est symbolisé, sur la figure 1, par les traits en pointillé entre les plans P(0) et P(1). De la sorte, dans le plan P(1), on peut directement calculer $\pi_1(1, 2)$ et $\pi_1(1, 4)$.

De la même façon, le trait pointillé entre les plans P(1) et P(2) indique que l'on peut utiliser dans le plan P(2) le résultat obtenu lors des calculs dans le plan P(1), à savoir que lorsque l'on arrive sur le noeud 3, on ne peut pas passer sur le noeud 4 du fait de la contrainte sur le nombre de débordements, mais que ce noeud peut être atteint avec deux débordements.

Pour les calculs, on peut utiliser, mutatis mutandis, le procédé décrit en référence à la figure 1. On peut aussi utiliser avantageusement le procédé décrit plus bas en référence à la figure 3, et à l'annexe; l'algorithme de l'annexe peut être simplifié pour ne prendre en compte que les débordements, ou que les compressions.

L'invention a été décrite en référence à la figure 2 dans le cas d'un coût calculé comme la somme des taxes encourues pour chacun des débordements. On peut considérer une autre forme de calcul du coût du débordement, et par exemple le coût décrit dans la demande de brevet déposée par la demanderesse sous le titre "Routage des appels avec débordements dans un réseau privé". Ce coût prend en compte non seulement les taxes encourues du fait des débordements, mais aussi l'occupation des ressources dans le réseau: entre deux routages, on préfère celui qui présente la somme des taxes la plus faible, et à taxes égales, on préfère le routage qui assure la meilleure utilisation des ressources du réseau.

La figure 3 montre encore un mode de mise en oeuvre de l'invention, dans un autre réseau privé. Dans l'exemple de la figure 3, on considère à la fois une limitation sur le nombre de compressions et décompressions, et sur le nombre de sauts ou débordements. Le réseau de la figure 3 comprend quatre noeuds numérotés de 1 à 4, et des artères ou arcs avec un multiplexeur entre les noeuds 1 et 2, 2 et 3, 3 et 4. Comme expliqué plus haut, une artère avec multiplexage implique une compression et une décompression. Pour plus de simplicité dans la présentation de la figure, et du fait qu'il n'est pas possible d'avoir une seule compression, on compte non pas les compressions et les compressions, mais le nombre de passages dans une artère avec un multiplexeur; ceci revient à compter les compressions et décompressions de 2 en 2: ainsi, le plan P(0, 1) correspond non pas à une compression, mais à un passage dans une artère avec un multiplexeur, i.e. en fait à une compression et une décompression.

Un débordement est possible entre les noeuds 1 et 4, avec une taxe de 1. Dans l'exemple , on cherche un routage entre les noeuds source 1 et destinataire 4, avec un nombre maximal de passages dans une artère multiplexée NVcompMax de 2, et un nombre maximal de sauts NSautMax de 2. On cherche un routage qui minimise le coût des débordements $\pi_{h,v}(s, i)$, i.e. la taxe totale encourue du fait des débordements. Intuitivement, la solution est un routage par débordement direct entre les noeuds 1 et 4. On note $Saut_{h,v}(s, n)$ le nombre minimal de sauts entre s et n.

Pour obtenir la solution, l'invention propose d'appliquer l'algorithme de Dijkstra, pour rechercher successivement des plus courts chemins pour des nombres donnés v de passage dans une artère multiplexée d'une part, et h de saut d'autre part. Dans l'exemple de la figure 1, on commence par chercher les plus courts chemins ne présentant aucune compression (v=0) et aucun saut (h=0), comme représenté symboliquement dans le bas de la figure 1 par le plan P(h=0, v=0); on cherche ensuite les plus courts chemin présentant une compression, et aucun saut, dans le plan P(0, 1), puis les plus courts chemins présentant deux compressions et décompressions et aucun saut, dans le plan P(0, 2). Enfin, on cherche les chemins avec un saut et aucune compression, dans le plan P(1, 0), ce qui permet d'obtenir une solution. Comme pour la figure 2, on note $\pi_{h,v}(s, n)$ le couple formé du nombre de saut et de la taxe totale encourue entre le noeud s et le noeud n, dans un routage présentant v compressions et décompressions et h sauts.

Dans le plan P(0, 0), on considère les routages sans compression ni saut, et on , et on détermine qu'il n'existe pas de routage sans compression ni débordement. En testant les voisins du noeud 1, on détermine que l'on peut atteindre le noeud 2 avec une compression et que l'on peut atteindre le noeud 4 avec un saut. Ceci conduit à mettre à jour les distances dans les plans P(0, 1) et P(1, 0), comme représenté en traits pointillés sur la figure.

Dans le plan P(0, 1), on considère les routages avec une compression et sans saut, et on détermine que $\pi_{0,1}$(1, 2) vaut 0 et que l'on ne peut pas atteindre d'autres noeuds. En examinant les voisins du noeud 2, on constate que l'on peut atteindre le noeud 3 avec 2 compressions, et on met à jour la distance correspondante dans le plan P(0, 2), comme représenté par le trait pointillé entre les plans P(0, 1) et P(0, 2).

Dans le plan P(0, 2), on considère les routages avec deux compressions et sans débordements. On note que $\pi_{0,2}$(1, 3) vaut 0 et que l'on ne peut pas atteindre le noeud 4.

Dans le plan P(1, 0), on détermine que l'on peut atteindre le noeud 4 avec un débordement, et que $\pi_{1,0}$(1,4) vaut 1.

Dans cet exemple, on cherche à minimiser le nombre de sauts, et on s'arrête donc dès que l'on a atteint le noeud destinataire, dans un plan. Lorsque l'on atteint le noeud destinataire pour une valeur donnée $h_0$ du nombre de sauts, on peut aussi poursuivre les calculs sur les différentes valeurs possibles de v, et considérer le chemin qui présente une distance minimale pour toutes les valeurs possibles v, avec $h \geq h_0$.

L'annexe à la fin de la présente description montre une façon de procéder aux calculs pour un réseau du type de celui de la figure 3. Dans ce mode de mise en oeuvre de l'invention, on procède de nouveau aux calculs de plus courts chemins dans chaque plan en appliquant l'algorithme de Dijkstra.

Dans l'exemple de l'annexe, on balaye les valeurs du nombre de saut h de 0 à NSautMax, et pour chaque valeur, on balaye les valeurs du nombre v de compression et décompression de 0 à NVCompmax. On procède ainsi successivement au calcul dans chaque plan P(h, v).

Pour chaque plan, on commence par une initialisation. Si h et v sont nuls, autrement dit dans le plan P(0, 0), on initialise de la façon suivante: pour tous les noeuds autres que le noeud source, on initialise $\pi_{h,v}$(s, n) à l'infini; pour tout noeud du réseau, $\phi_{h,v}$(n) dans le plan P(h, v) est NULL, i.e. aucun noeud n'a de prédécesseur dans l'arbre des plus courts chemins. Pour h = 0 et v = 0, pour les noeuds voisins de s, on initialise $\pi_{0,0}$(s, n) à la valeur correspondante de la fonction LireCoût; cette fonction estime le coût de passage entre deux noeuds voisins sur l'artère les reliant, ou sur un arc de débordement les reliant.

On met ensuite dans $\overline{S}$ tous les noeuds n autres que la source, avec une distance $\pi_{0,0}$(s, n). On procède ensuite à un test de cohérence, en appliquant la fonction VerifCohérence(l(s, n), h=0, v=0, s, n). Cette fonction contrôle la compatibilité des qualités dans le plan courant, et prépare le coût pour le plan suivant. Dans le plan P(0, 0), cette fonction vérifie la cohérence entre s et n, i.e. vérifie qu'un routage entre s et n est possible.

Pour les valeurs de h et v non tous deux nuls, i. e. dans les plans autres que P(0,0), on procède à l'initialisation de la façon suivante : on vide l'ensemble $\overline{S}$, et on y met les points pour lesquels le nombre de sauts est supérieur ou égal à la valeur courant de h. Ceci correspond à la démarche suivante:

- si un noeud n est déjà atteint en un nombre de sauts inférieur à h, i.e. s'il existe un chemin entre le noeud source s et le noeud n en moins de h saut, le noeud ne peut pas être rapproché du noeud source en passant par un noeud avec un nombre de sauts supérieur ou égal à h. Il n'est donc pas nécessaire de mettre le noeud n dans $\overline{S}$. Ceci correspond au choix d'optimisation dans ce mode de réalisation de l'invention, pour lequel on minimise le nombre de débordements, même au prix d'une compression supplémentaire.
- si le noeud n est déjà atteint en un nombre de sauts égal à h, i.e. s'il existe un chemin entre le noeud source s et le noeud n avec h sauts, le noeud n peut servir de transit pour atteindre d'autres noeuds avec h sauts; il peut aussi se rapprocher de la racine, moyennant une compression ou une décompression supplémentaire; on met donc le noeud n dans $\overline{S}$ ;
- si le noeud n est déjà atteint en un nombre de sauts supérieur à h, i.e. s'il existe un chemin entre le noeud source s et le noeud n avec plus de h sauts, ou s'il n'existe pas de chemin entre s et n, le noeud n peut être rapproché du noeud source; on le met donc dans $\overline{S}$.

On a donc dans $\overline{S}$ après l'initialisation dans le plan P(h, v) l'ensemble des noeuds non encore atteints, ou qui sont atteints par des routages avec h sauts ou plus.

Après l'initialisation, on procède au calcul des chemins dans le plan P(h. v). Dans chaque plan on procède à un calcul appliquant l'algorithme de Dijkstra, en mettant à jour les valeurs de $\pi_{h,v}$ dans les plans supérieurs, lorsque l'on ne peut plus progresser en respectant les contraintes sur h et v.

On considère donc le noeud n de $\overline{S}$ qui minimise la taxe $\pi_{h,v}$(s, i). On procède ensuite comme dans l'algorithme de Dijkstra; toutefois, lorsque l'on considère les voisins de n, on vérifie si on doit comprimer pour passer vers le point n, ou si l'on doit décomprimer, comme dans l'exemple de la figure 1. On met à jour de façon correspondante les valeur de distance dans le plan P(h, v+1).

En outre, lorsqu'un point du voisinage n'est susceptible d'être atteint que par un débordement, on met à jour la valeur de distance correspondante dans le plan P(h+1, v). Dans ce plan, on vérifie comme précédemment si on doit comprimer ou décomprimer; en effet les contraintes de compression et de décompression peuvent aussi s'appliquer à un arc de débordement.

Dans un mode de réalisation, s'il existe une artère sans compression sous-tendant le débordement, on n'autorise le débordement que si l'artère est saturée. Ceci revient à optimiser les ressources du réseau privé avant d'autoriser le débordement; on pourrait obtenir un résultat similaire avec une distance $\pi$ prenant en compte l'utilisation des ressources du réseau, comme expliqué dans la demande de brevet précitée de la demanderesse.

Après avoir parcouru les différents plans, au moins jusqu'à trouver un routage arrivant au noeud de destination, on retrouve le routage comme expliqué en référence à la figure 1.

Dans l'exemple de la figure 3, on privilégie la limitation des taxes de débordement au nombre de compressions et décompressions. Ceci se traduit par le parcours des plans de calcul - en commençant par saturer la contrainte sur le nombre de compressions et de décompressions avant d'envisager un saut. Bien entendu, l'invention fonctionne aussi dans le cas contraire, ou plus généralement dans n'importe quel balayage des différents plans possibles. Avec les notations h et v employées plus haut, il s'agit selon l'invention de balayer les couples (h, v), avec h $^2$ NVCompmax et v$^2$ NSautMax. On peut procéder comme dans la description, en balayant à h constant les valeurs de v, puis en faisant croître h; on pourrait aussi balayer à v constant les valeurs de h, puis en faisant croître v. On pourrait aussi procéder aux calculs à h+v constant, ou toute autre solution. En particulier, l'application de l'algorithme de l'annexe, avec v = 0, fournit une solution pour le calcul de la figure 1.

L'invention n'est pas limitée aux modes de réalisations décrits; elle s'applique plus généralement dans tout réseau privé pour le calcul de routage minimisant une ou plusieurs taxes, en satisfaisant une ou plusieurs contraintes sur une valeur maximale; dans l'exemple de la figure 1, on minimise la distance en terme de nombre d'artères, et la contrainte est une contrainte sur le nombre de compressions et de décompressions. Dans l'exemple de la figure 2, on minimise un coût de débordement, et la contrainte est une contrainte sur le nombre de sauts. Dans l'exemple de la figure 3, on cherche à minimiser les taxes de débordement, et à satisfaire des contraintes sur le nombre de compressions et décompressions et sur le nombre de débordements. On peut aussi appliquer l'invention à des contraintes distinctes, et à des fonctions de coût variées.

On pourrait aussi ne pas mettre en oeuvre l'étape de détermination du nombre minimal de compressions ou de décompressions; ceci n'aurait pour conséquence qu'un calcul le cas échéant plus long, et d'une exploration inutile de solutions non satisfaisantes.

Dans les modes de réalisation préférés, on a compté le nombre de compressions et de décompressions. Il est clair que l'on peut aussi ne compter que le nombre de compression, ou uniquement le nombre de décompressions, pour limiter de façon similaire le nombre total de compressions et de décompressions. Ceci repose sur la règle généralement applicable qu'une décompression suit nécessairement une compression antérieure. On notera que cette règle n'est pas toujours valables si on prévoit plusieurs types de compressions.

L'invention s'applique aussi à des types de réseau distincts de ceux décrits dans les modes de réalisation préférés.

Enfin, la description et les revendications mentionnent l'algorithme de Dijkstra. Il est entendu que ce terme couvre non seulement la version de l'algorithme de plus court chemin proposée par Dijkstra, mais aussi les versions proches, et notamment l'algorithme de Bellman ou l'algorithme de Floyd. On notera que l'algorithme de Bellman ne s'applique que pour les graphes sans circuits.

**Annexe**

```
Pour h = 0 à NSautMax faire
Pour v = 0 à NVcompmax faire
Si v = 0 et h = 0
Alors
    ∀ (h, v, n), πh,v(s, n) = ∞ et φh,v(n) NULL
    ∀ n ∈ Γs, π0,0(s, n) = LireCoût(1(s,n), h=0, v=0)
        PutInHeap(π0,0(s, n), S)
        VerifCohérence(l(s, n), h=0, v=0, s, n)
Sinon
    S=∅
    ∀ n Si Saut(s, n)3 h
    Alors
        Si v = 0 PutInHeap(πh,0(s, n), S)
        Sinon PutInHeap(Min[πh,v(s, n),πh,v-1(s, n)], S)
        Finsi
    Finsi
Finsi
Tant que S ≠ ∅ ou Min S < ∞, faire
```

```
        Soit n tel que πh,v(s, n) = Min{πh,v(s, i), i ∈ S}
        Mettre (n, πh,v(s, n)) dans S et retirer n de S
        Pour p ∈ Γn et p ∈ S
                c = LireCoût(l(n, p), h, v)
                Si πh,v(s, P) > πh,v(s, n) + c Alors
                        πh,v(s, p) := πh,v(s, n) + c
                        φh,v(p) := n
                FinSi
                UpdateHeap(πh,v(s, p), S)
                Si OnDoitComprimer
                Alors
                        πh,v+1 (s, p) := Min(πh,v+1(s, p); πh,v(s, n) + c)
                        Si nouveau πh,v+1 (s, p)
                        Alors
                                φh,v+1(p) = n
                        Finsi
                Finsi
                Si OnDoitDécomprimer
                        τh,v+1(s, p) := Min(πh,v+1(s, P); πh,v(s, n) + c)
                        Si nouveau πh,v+1(s, p)
                        Alors
                                φh,v+1(p) = n
                        Finsi
                Finsi
                Si OnNePeutPasPasserSurl'Artère
                        c = LireCoût(arcdébordement(n, p), h, v)
                        Si πh+1,v(s, p) > πh+1,v(s, n) + c Alors
                                πh+1,v(s, P) := πh+1,v(s, n) + c
                                φh+1,v(p) := n
                        FinSi
                        UpdateHeap(πh+1,v(s, p), S)
                        Si OnDoitComprimer
                        Alors
                                πh+1,v+1(s, P) := Min(πh+1,v+1(s, p); πh,v(s, n)+c)
                                Si nouveau πh+1,v+1(s, p)
                                Alors
                                        φh+1,v+1(p) = n
                                Finsi
                        Finsi
                        Si OnDoitDécomprimer
                                πh+1,v+1(s, P) := Min(πh+1,v+1(s, p); πh,v(s, n) + c)
                                Si nouveau πh+1,v+1(s, p)
                                Alors
                                        φh+1,v+1(p) = n
                                Finsi
                        Finsi
                Finsi
        FinPour
    FinTantQue
    FinPour
    FinPour
```

## Revendications

1. Procédé de routage entre un noeud source (source) et un noeud destinataire (destination) dans un réseau privé présentant des noeuds reliés par des artères, chaque artère pouvant être de type sans compression (q) ou de type avec compression ($q_c$), une compression étant mise en oeuvre sur au moins une des dites artères, mais le nombre total de compressions et de décompressions réalisées pour l'acheminement d'une communication ne devant pas dépasser une limite maximale fixée ; ce procédé comportant au moins une étape consistant à sauvegarder les résultats obtenus pour une valeur donnée du nombre de compressions et de décompressions afin de les utiliser pour les calculs ultérieurs ;

**caractérisé en ce qu'**il comporte :

- une étape (P(0)) de recherche d'un plus court chemin entre un noeud source (source) et un noeud destinataire (destination) pour un nombre donné de compressions et décompressions ;
- puis au moins une autre étape (P(1), (P2)) de recherche d'un plus court chemin entre ce noeud source (source) et ce noeud destinataire (destination) en faisant croître la valeur du nombre compressions et décompressions, celui-ci restant inférieur ou égal à la limite maximale fixée;
- puis une étape de détermination du chemin le plus court parmi les chemins les plus courts trouvés précédemment.

**2.** Procédé selon la revendication 1, **caractérisé en ce qu'**une étape (P(0), P(1), (P2)) de recherche d'un plus court chemin pour un nombre donné de compressions et décompressions comprend, en un noeud où le nombre de compressions et décompressions depuis le noeud source est égal au nombre donné, la recherche et la sauvegarde pour une étape de calcul ultérieure des artères adjacentes sur lesquelles une compression est mise en oeuvre.

**3.** Procédé selon la revendication 1, ou 2, **caractérisé en ce qu'**une étape (P(0), P(1), (P2)) de recherche d'un plus court chemin pour un nombre donné de compressions et décompressions s'effectue par application de l'algorithme de Dijkstra, en vérifiant le nombre de compressions lors de l'ajout d'un noeud au routage.

**4.** Procédé selon l'une des revendications 1 à 3, pour un réseau comprenant en outre des arcs de débordements (tax1, tax2, tax3) vers un réseau externe, **caractérisé en ce qu'**il comprend au moins deux étapes (P(0), P(1), (P2)) de recherche d'un plus court chemin pour un nombre donné de débordements et pour un nombre donné de compressions et décompressions ; une étape de recherche d'un plus court chemin pour un nombre de débordements et un nombre donné de compressions et décompressions utilisant des informations obtenues lors d'une étape de calcul de routage pour un nombre de débordements inférieur au dit nombre donné de débordements.

**5.** Procédé selon la revendication 3 ou 4, **caractérisé en ce que** les étapes (P(0), P(1), (P2)) de recherche d'un plus court chemin s'effectuent, pour un nombre donné de débordements, en faisant varier le nombre de compressions et décompressions, puis en faisant varier le nombre de débordements.

**Claims**

**1.** A method of routing between a source node (source) and a destination node (destination) in a private network having nodes connected by links, each link being of the compressionless type (q) or of the compression type ($q_c$), compression being used on at least one of said links, but the total number of compressions and of decompressions performed for conveying a communication must not exceed a fixed maximum limit; the method comprising at least one step consisting in saving the results obtained for a given value for the number of compressions and decompressions in order to use them for subsequent calculations;

the method being **characterized in that** it comprises:

- a step (P(0)) of seeking a shortest path between a source node (source) and a destination node (destination) for a given number of compressions and decompressions;
- then at least one other step (P(1), P(2)) of seeking a shortest path between the source node (source) and the destination node (destination) by increasing the value of the number of compressions and decompressions, said number remaining less than or equal to the fixed maximum limit;
- then a step of determining the shortest path from among the shortest paths found previously.

**2.** A method according to claim 1, **characterized in that** a step (P(0), P(1), P(2)) of seeking a shortest path for a given number of compressions and decompressions comprises, at a node where the number of compressions and decompressions from the source node is equal to the given number, seeking and saving for a subsequent calculation step adjacent links on which compression is used.

**3.** A method according to claim 1 or claim 2, **characterized in that** a step (P(0), P(1), P(2)) of seeking a shortest path for a given number of compressions and decompressions uses the Dijkstra algorithm and verifies the number of compressions when adding a node to the route.

**4.** A method according to any of claims 1 to 3, for a network further comprising overflow links (tax1, tax2, tax3) to an external network, the method being **characterized in that** it comprises at least two steps (P(0), P(1), P(2)) of seeking a shortest path for a given number of overflows and for a given number of compressions and decompressions, a step of seeking a shortest path for a number of overflows and a given number of compressions and decompressions using information obtained during a routing calculation step for a number of overflows less than said given number of overflows.

**5.** A method according to claim 3 or claim 4, **characterized in that** the steps (P(0), P(1), P(2)) of seeking a shortest path are effected for a given number of overflows by varying the number of compressions and decompressions and then by varying the number of overflows.

**Patentansprüche**

**1.** Verfahren zur Leitweglenkung zwischen einem Quellknoten (Quelle) und einem Zielknoten (Ziel) in einem privaten Netz, das Knoten aufweist, die durch Leitwege verbunden sind, wobei jeder Leitweg von der Art ohne Komprimierung (q) oder von der Art mit Komprimierung ($q_c$) sein kann, wobei eine Komprimierung auf mindestens einem dieser Leitwege eingesetzt wird, aber die Gesamtzahl der für die Weiterleitung einer Nachricht durchgeführten Komprimierungen und Dekomprimierungen eine festgesetzte Höchstgrenze nicht überschreiten darf; dieses Verfahren beinhaltet mindestens einen Schritt, der darin besteht, die Ergebnisse zu speichern, die man für einen bestimmten Wert der Anzahl von Komprimierungen und Dekomprimierungen gewonnen hat, um sie für die späteren Berechnungen zu nutzen;
**dadurch gekennzeichnet, dass** es folgendes enthält:

- einen Schritt (P(0)) Suche nach einem kürzesten Weg zwischen einem Quellknoten (Quelle) und einem Zielknoten (Ziel) bei einer bestimmten Anzahl von Komprimierungen und Dekomprimierungen;
- dann mindestens einen weiteren Schritt (P(1), (P2)) Suche nach einem kürzesten Weg zwischen diesem Quellknoten (Quelle) und diesem Zielknoten (Ziel), wobei man den Wert der Anzahl an Komprimierungen und Dekomprimierungen zunehmen lässt, wobei dieser kleiner oder gleich der festgesetzten Höchstgrenze bleibt;
- dann einen Schritt Ermittlung des kürzesten Weges unter den zuvor gefundenen kürzesten Wegen.

**2.** Verfahren gemäß Anspruch 1, **dadurch gekennzeichnet, dass** ein Schritt (P(0), P(1), (P2)) Suche nach einem kürzesten Weg für eine bestimmte Anzahl von Komprimierungen und Dekomprimierungen in einem Knoten, wo die Anzahl Komprimierungen und Dekomprimierungen ab dem Quellknoten gleich der bestimmten Anzahl ist, die Suche nach den benachbarten Leitwegen, auf denen eine Komprimierung eingesetzt wird, und die Speicherung für einen späteren Berechnungsschritt einschließt.

**3.** Verfahren gemäß Anspruch 1 oder 2, **dadurch gekennzeichnet, dass** ein Schritt (P(0), P(1), (P2)) Suche nach einem kürzesten Weg für eine bestimmte Anzahl von Komprimierungen und Dekomprimierungen durch Anwendung des Dijkstra-Algorithmus erfolgt, wobei die Anzahl der Komprimierungen beim Hinzufügen eines Knotens zur Leitweglenkung überprüft wird.

**4.** Verfahren gemäß einem der Ansprüche 1 bis 3 für ein Netz, das außerdem Überlaufbögen (tax1, tax2, tax3) hin zu einem externen Netz enthält, **dadurch gekennzeichnet, dass** es mindestens zwei Schritte (P(0), P(1), (P2)) Suche nach einem kürzesten Weg für eine bestimmte Anzahl Überlaufvorgänge und für eine bestimmte Anzahl Komprimierungen und Dekomprimierungen einschließt; einen Schritt Suche nach einem kürzesten Weg für eine Anzahl Überlaufvorgänge und eine bestimmte Anzahl Komprimierungen und Dekomprimierungen, wobei Informationen verwendet werden, die gewonnen wurden bei einem Schritt zur Leitweglenkungsberechnung für eine Überlaufzahl kleiner als diese bestimmte Überlaufzahl.

**5.** Verfahren gemäß Anspruch 3 oder 4, **dadurch gekennzeichnet, dass** die Schritte (P(0), P(1), (P2)) Suche nach einem kürzesten Weg für eine bestimmte Überlaufzahl erfolgen, indem man die Anzahl der Komprimierungen und Dekomprimierungen verändert, dann indem man die Anzahl der Überlaufvorgänge verändert.

**FIG_1**

**FIG_2**

FIG_3